# EUROPÄISCHE PATENTSCHRIFT

(11) **EP 2 750 820 B1**
(45) Veröffentlichungstag und Bekanntmachung des Hinweises auf die Patenterteilung: **15.07.2020**
(21) Anmeldenummer: 12766862.2
(22) Anmeldetag: 13.08.2012
(51) Int. Cl.: B23C 5/22, B23C 5/20, B23C 5/08

(54) **ZERSPANUNGSWERKZEUG**
CUTTING TOOL
OUTIL DE COUPE

(30) Priorität: 31.08.2011 DE 102011111513
(43) Veröffentlichungstag der Anmeldung: 09.07.2014
(73) Patentinhaber: Simtek AG, 72116 Mössingen (DE)
(72) Erfinder: SEIFERMANN, Norbert, 72411 Bodelshausen (DE)
(74) Vertreter: Jakelski & Althoff Patentanwälte PartG mbB
(86) Internationale Anmeldenummer: PCT/DE2012/000810
(87) Internationale Veröffentlichungsnummer: WO 2013/029585

(56) Entgegenhaltungen:
- EP-A1- 2 933 076
- DE-C- 861 921
- DE-U1- 20 006 439
- GB-A- 742 603
- US-A- 5 002 104
- US-A1- 2005 232 712
- US-A1- 2009 000 697
- US-A1- 2009 196 701
- US-A1- 2010 215 446

## Beschreibung

Die Erfindung betrifft ein Zerspanungswerkzeug in Tangentialfräser-Ausführung nach der Gattung des Anspruchs 1.

### Stand der Technik

Zerspanwerkzeuge in Tangentialfräser-Ausführung mit einem kreisscheibenförmigen Werkzeugkörper, auch als Scheibenfräser bezeichnet, sind aus dem Stand der Technik in vielfältiger Ausführung bekannt.

So geht beispielsweise aus der DE 10 2007 031 695 A1 ein Scheibenfräser für Kugelbahnen hervor mit am Scheibenumfang angeordneten Schneiden, die ein in etwa elliptisches Profil aufweisen.

Aus der DE 102 18 630 A1 geht eine Schneidplatte für einen Scheibenfräser hervor, die insbesondere für das Fräsen von Kurbelwellen geeignet ist.

Ein aus der DE 101 63 040 C1 hervorgehendes Werkzeug zum Herstellen eines Gelenkinnenteils für ein Gleichlaufdrehgelenk ist als Scheibenfräser ausgebildet. Diese Scheibenfräser sind als Schruppfräser und Schlichtfräser ausgestaltet, die im Abstand axial gegeneinander versetzt gemeinsam auf einer Drehspindel angeordnet sind. Jeder der beiden Scheibenfräser weist auf seiner Umfangsfläche eine Vielzahl von Fräszähnen auf. Die Schneidkontur hängt von der Form der zu erzeugenden Kugellaufbahnen, die mit diesen Fräsern hergestellt wird, ab. Wird bei diesem Scheibenfräser beispielsweise ein Fräszahn beschädigt, muss der gesamte Scheibenfräser ausgetauscht werden.

Die EP 0 873 808 A1 offenbart Schneideinsätze für einen Scheibenfräser. Dabei werden unterschiedliche Schneideinsätze an die Umfangsfläche des kreisscheibenförmigen Werkzeugkörpers befestigt. Hierbei können zwar einzelne Schneideinsätze ausgetauscht werden. Die Herstellung des Kreisscheibenwerkzeugkörpers ist jedoch wegen seiner recht komplexen Gestalt aufwendig und auch die Befestigung der unterschiedlichen Schneideinsätze erfordert einen nicht unerheblichen Arbeitsaufwand.

Die US 2005/0232712 A1 offenbart ein Fräswerkzeug, in das ein Fräseinsatz elastisch eingespannt ist. Der Fräseinsatz weist einen Fixierabschnitt und einen Fräsabschnitt mit einer Schneidkante auf. Am Fixierabschnitt wird der Fräseinsatz am Fräswerkzeug senkrecht zu dessen Radialrichtung befestigt.

Aus der US 2009/0196701 A1 geht ein Werkzeug für die spanabhebende Bearbeitung hervor, das einen Werkzeugkörper, beispielsweise eine rotierende Scheibe, umfasst, der auf seiner Vorderseite einen Verbindungsabschnitt aufweist, dessen Oberfläche gewellt ist, d.h. Rillen und Kämme aufweist. Auf diesem Verbindungsabschnitt wird ein auswechselbarer Fräseinsatz befestigt, der ebenfalls Rillen und Kämme aufweist. Zudem kann eine sogenannte Kassette vorgesehen sein, an der der Fräseinsatz befestigt wird und die dann wiederum lösbar am Grundkörper befestigt wird. Der Fräseinsatz wird stets senkrecht zur Radialrichtung befestigt. Die Kassette wird mittels eines Keilstücks lösbar am Grundkörper befestigt, wobei das Keilstück in radialer Richtung befestigt wird.

Die US 2010/0215446 A1 offenbart einen Fräseinsatz für ein drehbares Zerspanwerkzeug. Der Fräseinsatz weist zwei Schneidekanten auf, die voneinander beabstandet angeordnet sind. Hierbei wird der Fräseinsatz ebenfalls senkrecht zur Radialrichtung befestigt.

Durch die vorstehend beschriebene Befestigung senkrecht zur Radialrichtung, werden die Möglichkeiten der verwendbaren Fräseinsätze für die Werkzeuge begrenzt. Insbesondere bei Fräseinsätzen, deren Schneiden spitzenförmig in Radialrichtung über den Umfang des Fräswerkzeugs wegstehen, wirken aufgrund des Hebelgesetzes starke Zugkräfte an der Verbindungsstelle. Werden beispielsweise Schrauben zur Befestigung der Fräseinsätze verwendet, besteht die Gefahr, dass diese sich lösen.

Gegenstand der DE 200 06 439 U1 ist ein Bearbeitungswerkzeug, insbesondere ein Fräswerkzeug, mit radial wegstehenden Schneiden. Die Schneiden sind in Gruppen aufgeteilt, wobei die Schneiden innerhalb einer Gruppe nur jeweils ein Teil-Schneideprofil aufweisen, die zusammen das Gesamt-Schneideprofil ergeben. Die Schneiden können dabei in axialer Richtung einzeln in unterschiedlichen Werkzeugkörpern oder in einem gemeinsamen Monoblock angeordnet sein. Die Schneiden sind mit dem Werkzeugkörper verbunden und nicht lösbar befestigt.

Ein scheibenförmiger Messerkopf mit auswechselbaren Messern geht aus der DE 861 921 C hervor. Bei diesem scheibenförmigen Messerkopf mit auswechselbaren Messern weisen die Messer einen trapezförmigen Schaft auf, der in einem eine ihm entsprechende Form aufweisenden Ausschnitt des Messerkopfkörpers angeordnet ist.

Holzbearbeitungswerkzeuge, die in Tangentialfräser-Ausführung ausgebildet sind, gehen aus der GB 742 603 A, der EP 2 933 076 A1 sowie der US 5,002,104 A sowie der US 2009/000697 A1 hervor. Das Dokument US 5 002 104 zeigt ein Werkzeug gemäß dem Oberbegriff von Anspruch 1.

Der Erfindung liegt nun die Aufgabe zugrunde, ein gattungsgemäßes Zerspanwerkzeug in Tangentialfräser-Ausführung und insbesondere einen Scheibenfräser dahingehend weiterzubilden, dass mit geringstem Herstellungsaufwand unterschiedlichste Fräskonturen auf einfache Weise realisierbar sind.

### Offenbarung der Erfindung

Diese Aufgabe wird durch ein Zerspanungswerkzeug gemäß Anspruch 1 gelöst.

Die Anordnung der am Umfang des kreisscheibenförmigen Werkzeugkörpers angeordneten Vertiefungen auf der der Frässchneide zugewandten Seite ermöglicht eine besonders vorteilhafte Abfuhr von Spänen. Hierdurch ist die problemlose Herstellung unterschiedlichster Fräskonturen durch schnelle Abfuhr der beim Fräsen erzeugten Späne möglich.

Der Grundkörper und die in Radialrichtung wegstehende Frässchneide sind einstückig ausgebildet. Auf diese Weise müssen lediglich der kreisscheibenförmige Werkzeugkörper und das Fräswerkzeug, namentlich der Grundkörper des Fräswerkzeugs, aufeinander abgestimmt werden. Weitere Werkzeuge werden an dem kreisscheibenförmigen Werkzeugkörper nicht befestigt, sodass auch dessen Herstellung sich wesentlich einfacher gestaltet

Durch die Gestaltung der in Radialrichtung wegstehenden Frässchneiden sind unterschiedlichste Fräsaufgaben möglich, wobei die Fräswerkzeuge en bloc, das heißt als Ganzes montierbar sind, also Grundkörper und Frässchneide zusammen in einem einzigen Montagevorgang, was den Montageaufwand erheblich reduziert.

Durch die in den abhängigen Ansprüchen aufgeführten Maßnahmen sind vorteilhafte Weiterbildungen und Verbesserungen des in dem unabhängigen Anspruch angegebenen Zerspanungswerkzeugs möglich.

Die Frässchneide ist dabei bevorzugt an eine zu fräsende Form angepasst. Aufgrund der einfacheren Montage können so in kürzester Zeit unterschiedlichste Fräsformen realisiert werden.

Das Zerspanungswerkzeug besteht bevorzugt aus Hartmetall.

Das Hartmetall kann beschichtet sein.

Die Fräswerkzeuge werden vorzugsweise nur mit einer einzigen Schraube an dem kreisscheibenförmigen Werkzeugkörper befestigt.

### Kurze Beschreibung der Zeichnungen

Ausführungsbeispiele sind in den Zeichnungen dargestellt und in der nachfolgenden Beschreibung näher erläutert.

Es zeigen:
- Fig. 1: schematisch eine isometrische Darstellung eines Fräswerkzeugs eines erfindungsgemäßen Zerspanungswerkzeugs;
- Fig. 2: eine Draufsicht auf das in Fig. 1 dargestellte Fräswerkzeug;
- Fig. 3: eine entlang der Linie III-III in Fig. 2 dargestellte Schnittansicht des Fräswerkzeugs, das auf einem kreisscheibenförmigen Werkzeugkörper angeordnet ist;
- Fig. 4: eine isometrische Darstellung eines anderen Fräswerkzeugs eines erfindungsgemäßen Zerspanungswerkzeugs;
- Fig. 5: die Anordnung des in Fig. 4 dargestellten Fräswerkzeugs an einem kreisscheibenförmigen Werkzeugkörper;
- Fig. 6: ein wiederum anderes Ausführungsbeispiel eines Fräswerkzeugs eines erfindungsgemäßen Zerspanungswerkzeugs und
- Fig. 7: die Anordnung des in Fig. 6 dargestellten Fräswerkzeugs an einem kreisscheibenförmigen Werkzeugkörper.

### Ausführungsformen der Erfindung

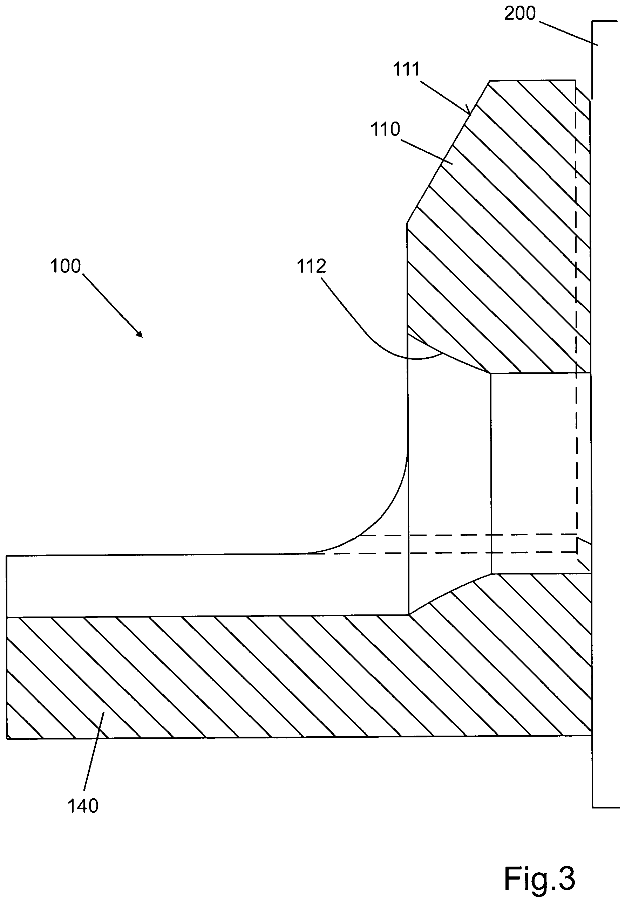

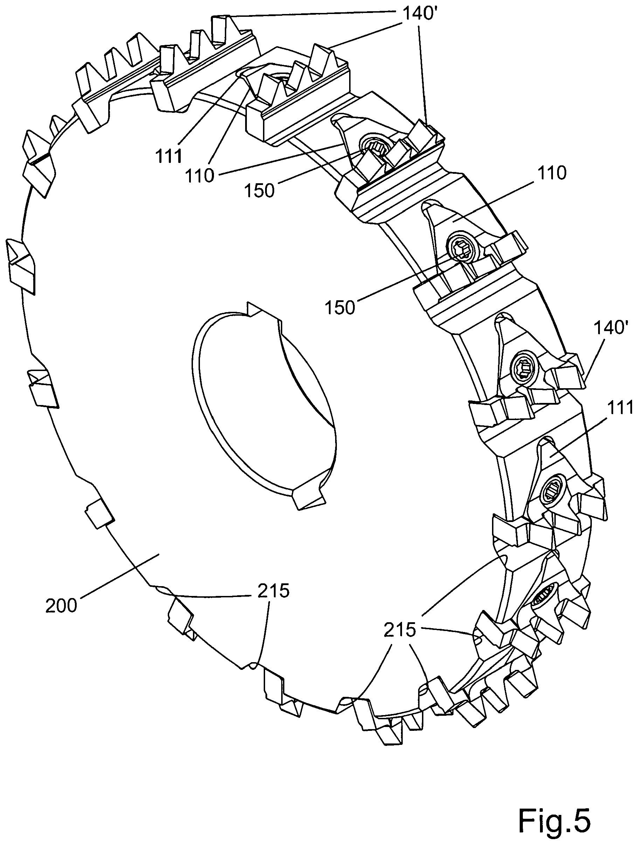

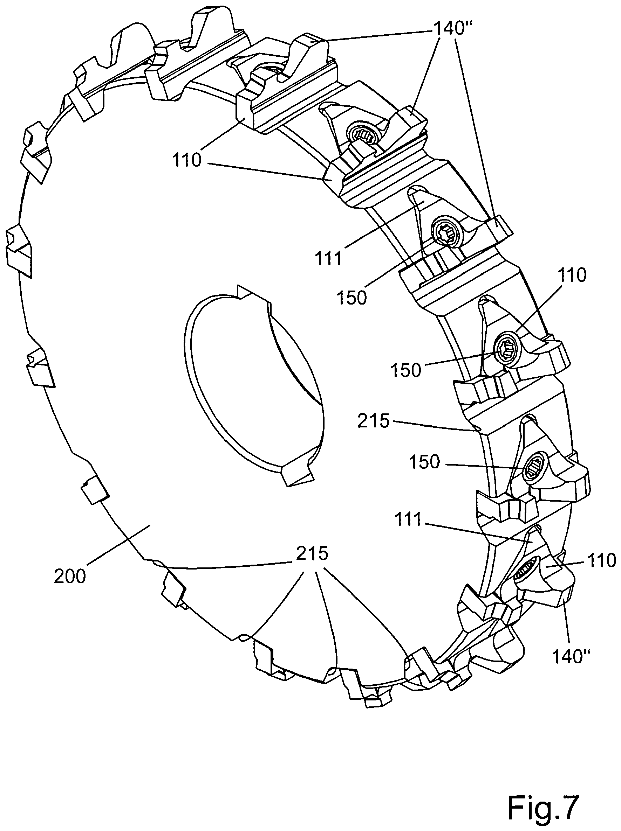

Ein Zerspanungswerkzeug in Tangentialfräser-Ausführung, das beispielsweise als Scheibenfräser ausgebildet ist, weist einen kreisscheibenförmigen Werkzeugkörper 200 auf (Fig. 3, Fig. 5, Fig. 7), an dessen Umfang jeweils im Winkel zueinander versetzt eine Mehrzahl von Fräswerkzeugen 100 angeordnet ist. Die Fräswerkzeuge 100 können dabei, wie in Fig. 5 und Fig. 7 dargestellt, im gleichen Winkel zueinander auf dem kreisscheibenförmigen Werkzeugkörper 200 angeordnet sein. Der kreisscheibenförmige Werkzeugkörper 200 wird in seinem Umfang Vertiefungen 215 aufweisen, die im montierten Zustand der Fräswerkzeuge 100 auf der der Frässchneide 140 zugewandten Seite positioniert sind und der Abfuhr von Spänen dienen. Die Erfindung ist jedoch nicht auf eine Anordnung im gleichen Winkel beschränkt, vielmehr können rein prinzipiell die Fräswerkzeuge 100 auch in nicht gleichen, unterschiedlichen Winkeln auf dem kreisscheibenförmigen Werkzeugkörper 200 angeordnet sein.

Diese Fräswerkzeuge 100 umfassen einen Grundkörper 110 und an diesem angeordnete, in Radialrichtung des kreisscheibenförmigen Werkstücks wegstehende Frässchneiden 140. Der Grundkörper 110 weist beispielsweise eine Öffnung 112 zur Aufnahme einer (in Fig. 3 nicht dargestellten) Schraube mit Schraubenkopf auf, mit der das Fräswerkzeug 100 an dem kreisscheibenförmigen Grundkörper 200 befestigbar ist.

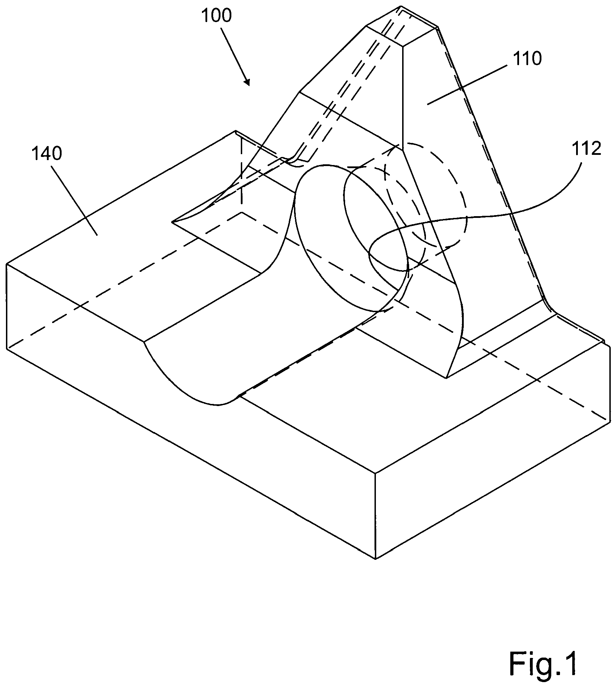

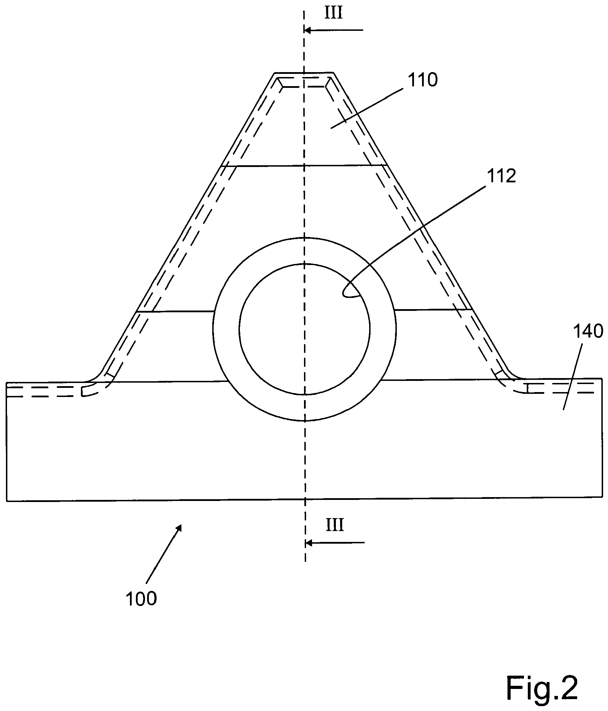

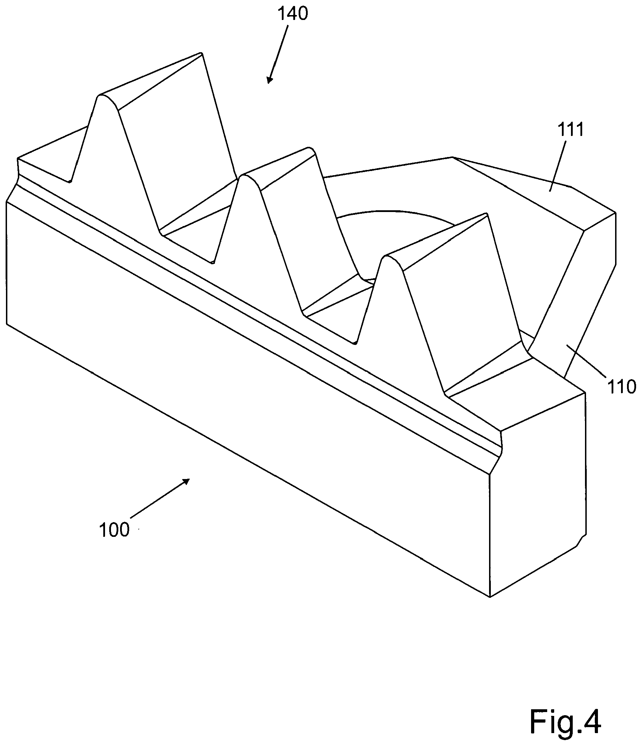

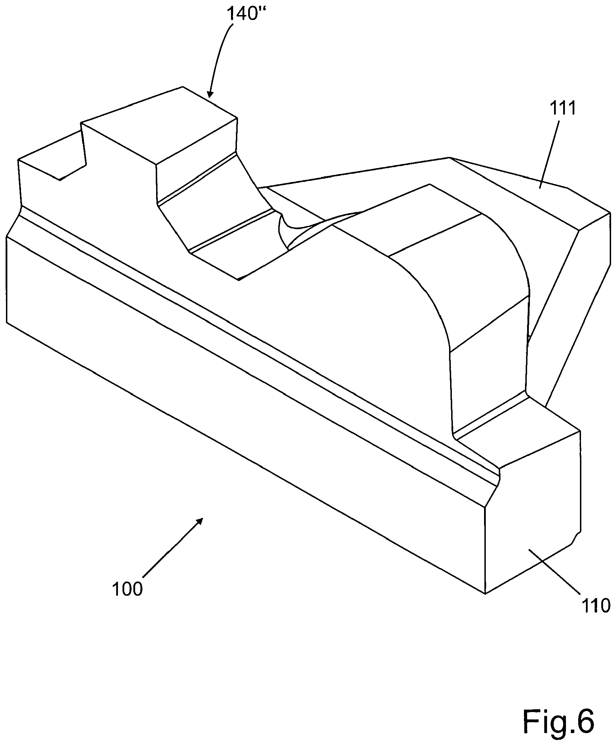

Die Grundkörper 110 können beispielsweise eine im Wesentlichen dreiecksförmige Gestalt aufweisen. Die in Radialrichtung hervorstehende Frässchneide 140 weist beispielsweise die in Fig. 1 bis 3 dargestellte, im Wesentlichen quaderförmige Gestalt auf. In den Figuren 1 bis 3 ist die Schneide 140 gewissermaßen in ihrer "Rohausführung" dargestellt. Diese Schneide ist gewöhnlich an die zu fräsende Fräskontur angepasst und kann daher rein prinzipiell eine beliebige Gestalt aufweisen. In Fig. 4 und Fig. 6 sind jeweils Fräswerkzeuge 100 mit unterschiedlichen Schneiden 140', 140" dargestellt. Die Schneide 140' des in Fig. 4 dargestellten Fräswerkzeugs 100 weist drei Zacken auf, die Schneide 140" des in Fig. 6 dargestellten Fräswerkzeugs 100 weist eine spezielle Schneidengeometrie mit einer gebogenen Schneide und einer quaderförmigen Schneide auf, die an eine spezielle Fräsform angepasst ist. Die Fräswerkzeuge 100 sind jeweils auf dem kreisscheibenförmigen Werkzeugkörper 200 mittels beispielsweise Schrauben 150 befestigt (Fig. 5, Fig. 7), wobei hier rein prinzipiell eine einzige Schraube 150 pro Fräswerkzeug 100 genügt.

Der Grundkörper 110 selbst kann beispielsweise abgeschrägte Bereiche 111 aufweisen. Die Schneide 140 und der Grundkörper 110 bestehen aus einem einstückigen Werkstück, das beispielsweise aus Hartmetall besteht und beschichtet sein kann.

Der Vorteil des Fräswerkzeugs 100 ist die leichte Montage an dem kreisscheibenförmigen Werkzeugkörper 200. Das Fräswerkzeug 100 wird jeweils nur mit einer einzigen Schraube150 befestigt. Durch die in Radialrichtung wegstehenden Schneiden 140 können beliebige Fräskonturen auf einfache Weise realisiert werden, ohne dass - wie im Stand der Technik - eine Mehrzahl von unterschiedlichen Schneideinsätzen am Umfang des kreisscheibenförmigen Werkzeugkörpers montiert werden müssen.

## Patentansprüche

1. Zerspanungswerkzeug in Tangentialfräser-Ausführung mit einem kreisscheibenförmigen Werkzeugkörper (200) und daran umfangsseitig angeordneten Fräswerkzeugen (100), wobei jedes Fräswerkzeug (100) aus einem am Umfang des kreisscheibenförmigen Werkzeugkörpers lösbar befestigten Grundkörper (110) gebildet wird, von dem in Radialrichtung wenigstens eine einstückig mit dem Grundkörper (110) ausgebildete Frässchneide (140) winkelig hervorsteht, **dadurch gekennzeichnet, dass** in dem kreisscheibenförmigen Werkzeugkörper (200) Vertiefungen (215) angeordnet sind, die im montierten Zustand der Fräswerkzeuge (100) auf der der Frässchneide (140) zugewandten Seite positioniert sind.

2. Zerspanungswerkzeug nach Anspruch 1 oder 2, **dadurch gekennzeichnet, dass** die Frässchneide (140) eine vorgebbare Fräskontur aufweist.

3. Zerspanungswerkzeug nach einem der vorstehenden Ansprüche, **dadurch gekennzeichnet, dass** es aus Hartmetall besteht.

4. Zerspanungswerkzeug nach Anspruch 3, **dadurch gekennzeichnet, dass** das Hartmetall beschichtet ist.

5. Zerspanungswerkzeug nach Anspruch 1, **dadurch gekennzeichnet, dass** die Fräswerkzeuge (100) mittels einer Schraube (150) an dem kreisscheibenförmigen Werkzeugkörper (200) befestigbar sind.

## Claims

1. Machining tool in tangential milling cutter configuration having a circular disc-shaped tool body (200) and milling tools (100) arranged on the circumference thereof, wherein each milling tool (100) is formed from a base body (110) releasably fixed on the periphery of the circular disc-shaped tool body, from which base body at least one milling cutting edge (140) formed integrally with the base body (110) protrudes at an angle in the radial direction, **characterised in that** indentations (215) are arranged in the circular disc-shaped tool body (200), said indentations being positioned in the mounted state of the milling tools (100) on the side facing towards the milling cutting edge (140).

2. Machining tool according to claim 1 or 2, **characterised in that** the milling cutting edge (140) has a predeterminable milling contour.

3. Machining tool according to one of the preceding claims, **characterised in that** it consists of carbide metal.

4. Machining tool according to claim 3, **characterised in that** the carbide metal is coated.

5. Machining tool according to claim 1, **characterised in that** the milling tools (100) can be fixed to the circular disc-shaped tool body (200) by means of a screw (150).

## Revendications

1. Outil d'usinage par enlèvement de copeaux de type fraise tangentielle, comportant un corps d'outil (200) en forme de disque et des outils de fraisage (100) disposés sur son pourtour, chacun des outils de fraisage (100) étant formé d'un corps de base (110) qui est fixé de façon amovible sur le pourtour du corps d'outil en forme de disque et duquel fait saillie, de manière radiale et angulaire, au moins un tranchant de fraise (140) formé d'un seul tenant avec ledit corps de base (110), **caractérisé en ce que** des renfoncements (215) sont agencés dans ledit corps d'outil (200) en forme de disque et sont disposés, à l'état monté des outils de fraisage (100), sur son côté tourné vers le tranchant de fraise (140).

2. Outil d'usinage par enlèvement de copeaux selon la revendication 1 ou 2, **caractérisé en ce que** le tranchant de fraise (140) présente un contour de fraise prédéfinissable.

3. Outil d'usinage par enlèvement de copeaux selon l'une des revendications précédentes, **caractérisé en ce qu'**il se compose de carbure.

4. Outil d'usinage par enlèvement de copeaux selon la revendication 3, **caractérisé en ce que** le carbure est revêtu.

5. Outil d'usinage par enlèvement de copeaux selon la revendication 1, **caractérisé en ce que** les outils de fraisage (100) peuvent être fixés sur le corps d'outil (200) en forme de disque au moyen d'une vis (150).
